# EUROPEAN PATENT SPECIFICATION

(11) **EP 1 169 198 B1**
(45) Date of publication and mention of the grant of the patent: **14.01.2004**
(21) Application number: 00919210.5
(22) Date of filing: 17.03.2000
(51) Int. Cl.: B60R 21/09, B60R 21/22, B62D 1/18

(54) **SAFETY SYSTEM FOR STEERING WHEEL**
SICHERHEITSEINRICHTUNG FÜR EIN LENKRAD
SYSTEME DE SECURITE D'UN ENSEMBLE VOLANT DE DIRECTION

(30) Priority: 18.03.1999 SE 9900985
(43) Date of publication of application: 09.01.2002
(73) Proprietor: Andum AB, 901 04 Umea (SE)
(72) Inventor: Sundholm, Lars, 907 38 Umea (SE); Lindkvist, Mats, 462 41 Vändersborg (SE)
(74) Representative: Onn, Thorsten
(86) International application number: PCT/SE2000/000525
(87) International publication number: WO 2000/058132

(56) References cited:
- WO-A1-00/18632
- WO-A1-98/10960
- DE-A1- 3 934 588
- DE-A1- 4 105 821
- DE-A1- 4 301 933
- US-A- 5 507 521
- US-A- 5 769 454
- US-A- 5 871 233
- US-A- 5 984 355

## Description

The present invention concerns a safety system for a steering wheel for the reduction of personal injuries to vehicle drivers during head-on collisions according to the preamble of claim 1 which is disclosed in WO 98/10 960A.

Essentially all cars today are equipped with an airbag in the steering wheel, for the purpose of preventing injury.

An airbag on its own, however, cannot absorb the amount of energy that is required to arrest the movement of a driver not wearing a safety belt in a head-on collision at, for example, 50 km per hour. The airbag is intended to distribute the load evenly over the head and chest so that local heavy loads do not arise on any part of the body. A major part of the kinetic energy is normally absorbed in the steering wheel suspension. Vehicles with airbags thus have some form of collapsing steering wheel suspension that is intended to collapse in a controlled manner so that a value of approximately 60 g for the chest acceleration is not exceeded.

Several vehicles with airbags are additionally provided with what is known as a "knee-bar". The intention of the knee-bar is to mitigate the effects during a head-on collision of the knees impacting with the lower surface of the instrument panel and to absorb the kinetic energy of the lower body. It is constructed such that the loading of force onto the thighs of the driver during a collision does not exceed approximately 10 kN. The knee-bar is normally placed inside the panelling and is thus not seen, it is also usually anchored in the vicinity of the steering wheel suspension.

The events during a collision with a barrier or a head-on collision can be described as follows. The deformation of the frontal part is initiated when the vehicle makes contact with a barrier. The speed of the vehicle is reduced while the driver essentially maintains his or her original speed. This means that the driver after some period reaches the furnishings, that is, the steering wheel suspension with the steering wheel and the airbag in addition to the knee-bar. These must thus be dimensioned for a regulated deformation, so that the tolerance levels of the body are not exceeded.

The characteristic that corresponds to the frontal deformation is termed in technical language the "pulse" of the vehicle. The pulse thus describes the process of retardation of the vehicle during the collision. An aggressive pulse, that is, a stiff frontal section, involves a sudden retardation of the vehicle. A subdued pulse, that is, a soft frontal section with a long deformation section, involves a more subdued braking. A subdued pulse is naturally preferable with respect to the travellers, but means that the vehicle becomes larger.

The worst course of events during a collision for the driver is a case in which the vehicle has completely come to rest before the driver has begun to apply load to the furnishings. In such a case, very high demands are placed on the ability of the furnishings to absorb the kinetic energy of the driver.

It follows that an optimal course can be described as one in which the driver even before the collision is placed so close to the furnishings that he or she already initially applies a load to these. In this way, the driver becomes a part of the living mass of the vehicle and can thus benefit from the deformation zone of the front as an extended braking distance, which reduces the loads.

A driver sits at approximately the same distance from the furnishings, irrespective of the size of the automobile, which is why considerably larger demands are made on the airbag system of a small automobile. For increased safety, it is a matter of coupling the driver to the automobile as rapidly as possible, in order to in this way limit the levels of injury. This means, among other things, that the steering wheel suspension must be stable, in order to be able to rapidly build up a force of reaction. Too soft a suspension system means that it becomes deformed without absorbing energy during the critical phase when the vehicle is still being deformed. Another method of rapidly coupling the driver to the automobile is to use very aggressive and hard airbags that are rapidly blown up and in this way rapidly couple the driver to the automobile.

There is one process that arises with most steering wheel suspension systems and that dramatically affects the functioning of the system in the real traffic environment. When an driver who is not wearing a safety belt makes contact with the furnishings during a collision, it is the knees that first make contact with the furnishings. This is a result of the fact that it is normally the knees that are those parts of the body situated closest to the furnishings. When the knees thus load the knee-bar, the knee-bar presses the steering wheel suspension up, which in turn means that the steering wheel is pushed away from the driver's chest and is angled upwards. When the driver subsequently loads the airbag, this and the steering wheel have assumed a very unfavourable angle, resulting in the driver loading the lower part of the steering wheel ring without any appreciable part of the airbag between. This phenomenon leads to two negative effects. The contact of the driver with the airbag is delayed and the pulse cannot be exploited; and the steering wheel adopts an unfavourable angle relative to the body. This is currently compensated for by making the airbag larger and more aggressive.

These problems have been partially solved by means of a method and device for the manoeuvring of a steering wheel suspension during a head-on collision, which have been described in our WO9810960.

In brief, a method and a steering wheel suspension system are described there for the reduction of injuries to a driver during a head-on collision of a vehicle that incorporates a steering wheel equipped with an airbag having a steering wheel shaft that is rotatably supported in a holder device for steering. The holder device is in turn mounted for rotation around a support shaft that is arranged at a distance from the steering wheel shaft and runs transverse across the vehicle, and that under normal conditions is locked in a defined position relative to the support shaft by means of a breakable locking means. During a collision, the driver's knees make contact with a displaceable knee-bar that applies a force at a radial distance from the support shaft against the holder device, which by this means rotates around the support shaft and brings the steering wheel shaft into an essentially horizontal collision position in front of the driver, whereby the steering wheel ring by this means will be arranged essentially vertically in front of the driver of the vehicle and can thus better arrest the movement of the driver.

The displaceable knee-bar is attached to a holder device in order to, when loaded by the knees of the driver, transmit these forces to the holder device. The knee-bar is connected to the holder device, by means of a device, at a radial distance from its axis of rotation - the support shaft, whereby generation of torque is achieved in the holder device.

The knee-bar can consist of a tube that is mounted for rotation to the steering wheel bar and on which is mounted a plate hanging downwards, this plate may be placed between the steering wheel suspension and the instrument panel, or it can, for example, constitute part of the instrument panel.

Between the holder device and the knee-bar is preferably arranged an energy-absorbing link that is designed to deform at a particular load and in this way limit the force of collision that afflicts the knees and hips of the driver. The deformation, however, should first occur after that the holder device has been rotated into the collision position.

One remaining technical problem in the system described above is the risk that a driver, as a result of build or the sitting position chosen, is placed with the knees at so great a distance from the said knee-bar that positioning of the steering wheel into the collision position is delayed.

The intention of the present invention is to solve the remaining problem described above.

This intention is achieved with a safety system, according to claim 1.

Further properties, advantages and improvements of the invention will be made clear by the following detailed description of known technology and embodiments of the invention, which constitute examples and thus are not limiting for the protective extent of the invention. In order to facilitate understanding, references to the attached drawings, in which equivalent or similar parts have been given the same reference labels, are included in the text.

**Fig. 1** shows schematically and in perspective a steering wheel suspension according to known technology.

**Fig. 2** shows a side view of the steering wheel suspension according to Fig. 1, equipped with an embodiment of the present invention.

**Fig. 3** shows another embodiment which is not part of the present invention.

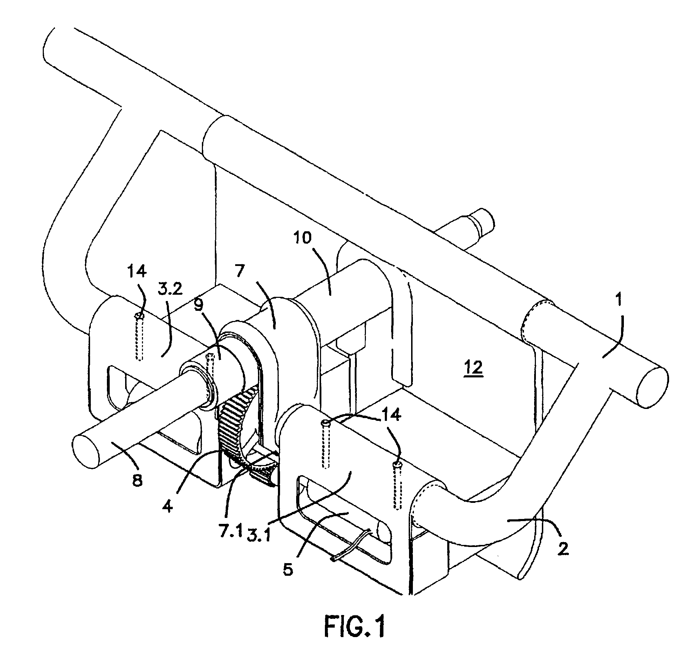

A steering wheel suspension system of known technology is shown in fig. 1, taken from our WO9810960. The system is described in connection with an automobile, which is not shown, and is suspended from a steering wheel bar 1 running under the instrument panel between what are known as the "A-pillars" of the automobile, which can, for example, comprise the mounting for doors and windows in an automobile.

The steering wheel suspension system includes a steering wheel equipped with an airbag with a steering shaft 8 that is connected to the steering mechanism of the vehicle, and that is rotatably supported in a holder device for steering. The holder device is in turn mounted for rotation around a support shaft that runs transverse across the vehicle, and that under normal conditions is locked in a defined position relative to the support shaft by means of a breakable locking means.

The holder device is provided with devices for adjusting the height and depth position of the steering shaft and thus the steering wheel, according to the wishes of the driver, when the holder device is in its initial position.

A U-shaped tube 2 for suspending the steering wheel is arranged with its ends fixed, for example by welding, to the steering wheel bar 1. The steering wheel suspension tube includes the support shaft 2, around which the holder device is rotatably supported.

The holder device includes a connector 7 that supports the steering wheel shaft, and that is mounted for rotation around the steering wheel suspension tube 2.

The steering wheel shaft 8 is rotatably mounted with bearings in a sliding sleeve 9, which in turn is arranged in a tube 10 such that it can be axially displaced, the tube 10 being fixed connected to the connector 7. On the lower surface of the sliding sleeve is arranged a row of teeth 7.2, intended for engagement with a complementarily designed adjustment mechanism.

The connector 7 here consists of a U-bent sheet metal connector with rotationally stiffened sheet metal bends, which connector at its free ends is rotatably supported by the steering wheel support tube 2. At the two outer edges of the connector 7, in association with the rotatable attachment, a row of teeth 7.1 is arranged intended for engagement with a complementarily designed adjustment mechanism.

On the steering wheel suspension tube 2 are further arranged two supported devices that are individually rotatable, in the form of motor housings 3.1 and 3.2, one on each side of the connector. In each of these motor housings, an electric motor 5 and 6, respectively, is arranged equipped with a cogwheel on its output shaft.

The upper part of the holder device thus includes the connector 7, while the lower part of the holder device includes the motor housings.

A cogwheel 4 equipped with an external ring of teeth is arranged on the steering wheel suspension tube 2 between the motor housings 3.1 and 3.2, and internal to the U-connector 7. The cogwheel 4 has a diameter that allows it to engage with the row of teeth 7.2 on the sliding sleeve.

The displaceable knee-bar 12 is connected to the motor housings 3.1, 3.2, in order to be able to transfer the forces when loaded by the knees of the driver to the rotatably supported motor housings. The knee-bar is connected through a means 13 to the motor housings at an axial distance from their axis of rotation - the support shaft - whereby generation of torque is achieved in the holder device.

The knee-bar 12 consists of a tube that is mounted for rotation on the steering wheel bar 1 and to which a downwardly hanging plate is attached. This plate can be located between the steering wheel suspension and the instrument panel or, for example, can comprise part of the instrument panel.

Between the motor housings 3 and the knee-bar 12 is preferably arranged an energy-absorbing link 13 that is intended to deform at a particular load, and in this way limit the force of collision that afflicts the knees and hips of the driver. The deformation, however, should first occur after that the holder device has been rotated into the collision position.

Both electrical motors 5 and 6 are fixed mounted in their respective motor housing. The motor housings are suspended from the steering wheel suspension tube 2 and in their initial positions are prevented from rotating around the tube 2 by means of preventing rotation 14, that only release the motor housings for rotation once the loading has exceeded a certain level. The means of preventing motion can, for example, consist of shear-pins, spring-loaded ball locks, hooks that fail at a loading that exceeds a certain level, or other means known to one skilled in the art.

During normal driving conditions, the steering wheel suspension system functions in the same way as any other steering wheel suspension device with the advantage that it can offer two infinitely variable possibilities of adjusting the steering wheel. The system can adjust the steering wheel in the depth direction, that is, the steering wheel can be adjusted away from and towards the driver, and the steering wheel can be tilted upwards and downwards, which means that the desires of the driver for comfort can be satisfied.

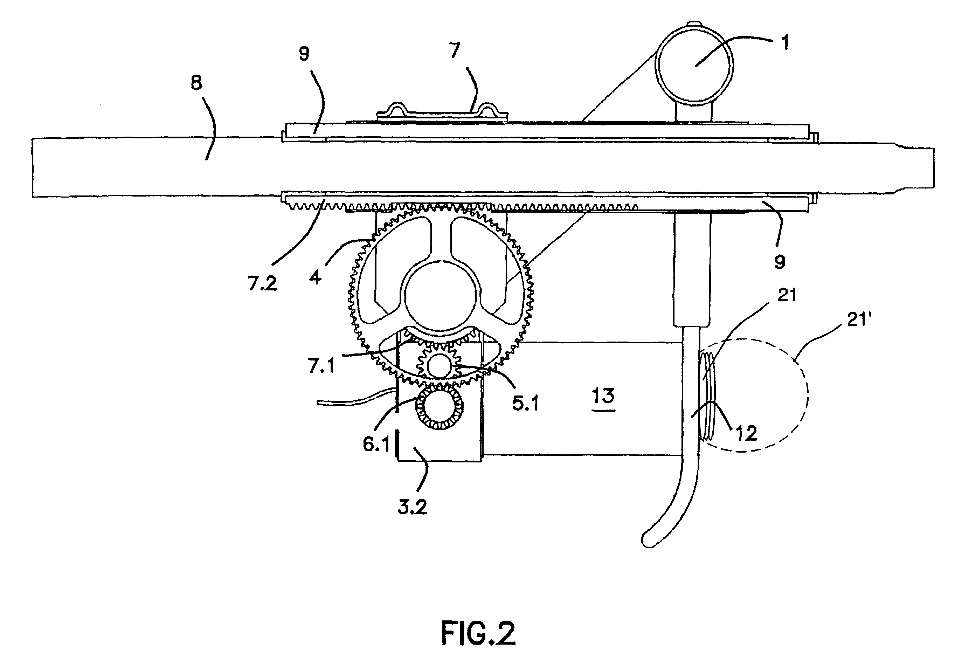

The depth adjustment is manoeuvred, as is shown in fig. 2, by regulation of the electric motor 6, whose cogwheel 6.1 is engaged with cogwheel 4 and turns it. When cogwheel 4 is turned, the toothed rack 7.2 is actuated so that the sliding sleeve 9 is moved either forwards or backwards, depending on the direction in which the cogwheel 4 is turned by the electric motor 6. The steering wheel shaft 8, onto which the steering wheel is mounted, is fixed to the sliding sleeve in the axial direction, but can be turned in the sliding sleeve, due to the provision of bearings. Thus, when the sliding sleeve 9 is displaced in the axial direction the steering wheel shaft follows this motion.

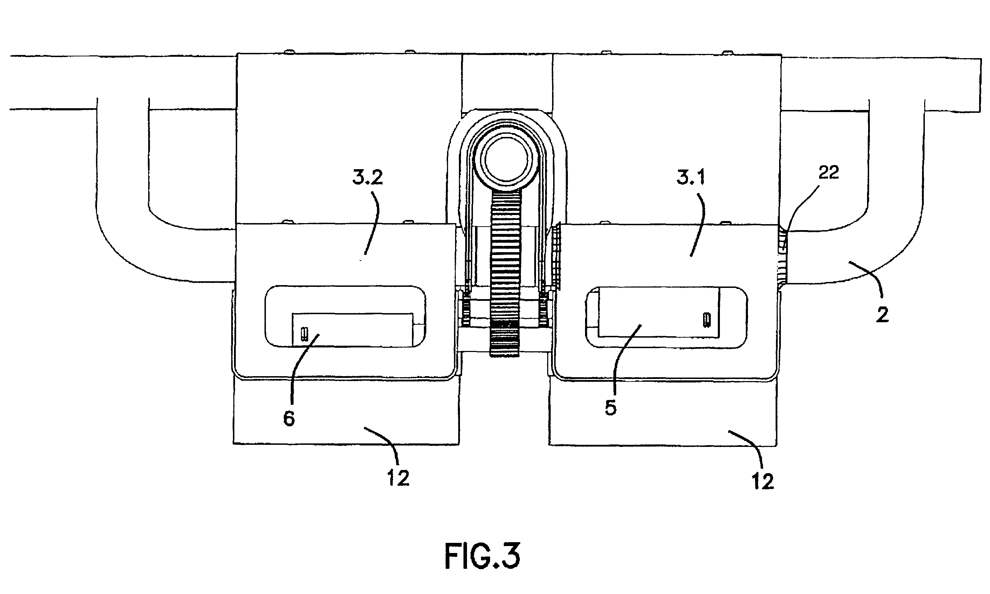

The tilt motion, as is shown in fig. 2 and fig. 3, is manoeuvred by the electric motor 5, with its cogwheel 5.1, actuating the toothed edges 7.1 of the connector. The motion of the electric motor 5 causes the connector 7 to rotate around the steering wheel suspension tube 2, which means that the steering wheel shaft and the steering wheel change their angle depending on the direction in which the electric motor turns the cogwheel.

When the steering wheel adjustment is not being altered, the shafts of the two electric motors 5 and 6 are locked, which means that it is not possible to rotate the motors around or the cogwheels around that are arranged on the output shafts of the motors. The adjustment.mechanism is internally fixed.

Should the vehicle for any reason collide, the following situation arises. When the vehicle starts to decelerate the body of the driver continues to move forwards in the vehicle as a result of its inertia. The knees of the driver, which are located relatively close to the furnishings, collide with the knee-bar 12, which is supported by the steering wheel bar 1. The knee-bar 12 is displaced forwards towards the motor housings. The energy-absorber 13 between the knee-bar 12 and the motor housings 3.1, 3.2 transfers the force to the motor housings, which experience a force as large as that experienced by the knee-bar 12. The energy-absorber at this stage transfers the complete force without being itself deformed. When the load on the motor housings is sufficiently large, the shear-pins of the motor housings are broken and the motor housings rotate around the steering wheel suspension tube 2.

When the holder device reaches its end position, achieved the collision position and the load on the knee-bar rises, the energy-absorber in the knee-bar starts to become deformed and in this way limits the forces that act on the thighs of the driver.

By arranging the motor housings to be individually rotatable, they can through a suitable choice of levers be made to rotate different amounts around the axis of rotation 2 for a given displacement of the knee-bar. The choice of distance between the axis of rotation and the toothed bar 7.2 and the mounting of the steering wheel shaft at the connector allows a further opportunity to regulate mutually differing rotation and displacement gearings in the holder device. In this way, axial displacement of the steering wheel shaft 8 under influence of the cogwheel 4 can be achieved with, for example, locked motor shafts, and indirectly of that the locked cogwheel 6.1 is displaced axially towards the driver as the holder device takes up its collision position.

It is advantageous to achieve some form of energy absorption in the steering wheel suspension when the chest of the driver loads the airbag and thus the steering wheel suspension. This can, for example, be achieved by allowing the steering wheel shaft to be pressed in against the sliding sleeve and to deform it. Another example is to allow the teeth of the sliding sleeve to be deformed against the cogwheel. Other forms of arrangement for the absorption of axial kinetic energy known to one skilled in the arts can also be applied.

In this way a steering wheel suspension is achieved that tilts the steering wheel shaft during a collision to an essentially horizontal position, which is an advantageous position in front of the driver for the steering wheel and steering wheel shaft so that these can receive and arrest the motion of the driver.

The steering wheel is displaced towards the driver and breaks, due to the horizontal position of the steering wheel shaft, not upwards, which is why the airbag will come into contact with the driver very early in the course of the collision and the collapse of the steering wheel suspension is easier to dimension correctly.

The knee-bar 12 is preferably constructed in one piece but can also be divided into two or several individually moving pieces. The knee-bar, or the knee-bars, can also be provided with a recess or slot in order to allow free space for the steering wheel shaft 8. A glide bearing 11 or other devices that contribute to the control and/or stabilisation of the steering wheel shaft can be arranged in this slot.

In order to cope with the risk that a driver sits with the knees at such a large distance that they have no time to load the knee-bar, an inflatable bag 21 of the same type as an airbag is arranged, according to one embodiment of the present invention, in association with the knee-bar, at the impact surface that is directed towards the driver. The bag is inflated 21' during a collision and in this way couples the knees of the driver to the knee-bar early, which ensures that even a driver who sits in an unfavourable position influences the knee-bar early in the pulse and brings the steering wheel in this way into the collision position.

What is known as a collision sensor, of a type that is familiar with one skilled in the arts, is preferably used to trigger the bag at the knee-bar. It can also be a further advantage if the collision sensor is arranged only to react to head-on collisions.

The collision sensor can be used in an alternative embodiment which is not part of the present invention to trigger a pyrotechnic drive unit or an electric motor to carry out the tilting motion for bringing the steering wheel into the collision position.

Thus, in this embodiment a pyrotechnic drive unit can be used instead of the knee-bar that is influenced by the knees of the driver to apply the force that is required at a radial distance from the support shaft in order to bring the steering wheel into the collision position. It is an advantage if this pyrotechnic drive unit is activated by some means suitable for the purpose, for example, a collision sensor.

In another embodiment which is not part of the present invention, the electric motor, however, must have very high quality properties, since the positioning of the steering wheel must take place very rapidly. On the other hand, such motors are available, and are here denoted high-acceleration motors and high-speed motors, depending on the demands that are placed on the motor.

Fig. 3 shows how such a motor 5' can be arranged in the holder device and there replace or complement the traditional motor for the positioning of the steering wheel into a driving position that is comfortable for the driver. In contrast to known technology, the motor housing 3.1 in the embodiment according to fig. 3 has been attached fixed to the support shaft 2, for example, by welding 22, riveting, or another suitable means of fixing. The locking of the holder device into the tilted direction during normal progress of the vehicle is carried out in this embodiment by the motor 5, which is capable of maintaining a set position. During a collision and following a signal from the collision detector, the high-acceleration motor 5 starts, and brings the steering wheel into the collision position.

In the embodiment according to fig. 3, at least the connection between the knee-bar and the motor housing 3.1 is furthermore broken. The connection between the knee-bar and the motor housing 3.2 can remain in place if the motor housing 3.2 is provided with the aforementioned breakable means of preventing rotation 14.

The connection between the knee-bar and the motor housing 3.2 can, in a further embodiment, be preserved with or without the aforementioned airbag at the knee-bar. This, together with the high-acceleration and high-speed motor 5 that is controlled by a collision sensor, or with a pyrotechnic drive unit, provides a double guarantee that the positioning of the steering wheel will take place.

## Claims

1. A safety system for a steering wheel in a vehicle that during a collision is capable of positioning a steering wheel equipped with an airbag in an essentially vertical position in front of the driver, and that includes a steering wheel equipped with an airbag with a steering wheel shaft (8) that is attached to the steering mechanism of the vehicle and that is rotatably supported in a holder device (3, 4, 5, 6, 7, 9, 10) for control, which holder device in turn is mounted for rotation around a support shaft (2) that stretches across the vehicle and under normal conditions is locked by means of a breakable means of locking (14) in a fixed position relative to the aforementioned support shaft (2), whereby the steering wheel shaft exhibits a particular initial angle relationship to a horizontal plane, normally forwards and diagonally downwards and the support shaft (2) is arranged by the holder device at a radial distance from the steering wheel shaft (8) and an impact surface (12) intended for the knees of the driver is displaceably arranged in association with the instrument panel of the vehicle, which impact surface is connected to the holder device (3, 4, 5, 6, 7, 9, 10) at a distance from the support shaft (2) so that the impact surface (12) during a collision is loaded by the knees of the driver, applying to the holder device a torque around the support shaft (2) that overcomes the locking action of the means of locking and swinging the holder device in a direction that positions the steering wheel shaft (8) in an essentially horizontal position and that positions the steering wheel ring in an essentially vertical position in front of the driver of the vehicle, **characterised in that** on the impact surface towards the driver is arranged an inflatable bag of the same type as an airbag, which during a collision is intended to be inflated and in this way cause the coupling of the driver to the impact surface to occur earlier, hastening the positioning of the steering wheel into an essentially vertical collision position.

2. The system according to claim 1, **characterised in that** the inflation of the knee bag is initiated by a collision sensor of standard type.

## Patentansprüche

1. Sicherheitseinrichtung für ein Lenkrad in einem Fahrzeug, welches ein mit einem Airbag ausgerüstetes Lenkrad in eine im wesentlichen senkrechte Stellung vor dem Fahrer zu bringen gestattet und ein Lenkrad ausgestattet mit Airbag, mit einer Lenkradwelle (8) aufweist, die mit der Lenkung des Fahrzeugs verbunden ist und zum Steuern drehbar in einer Halterung (3, 4, 5, 6, 7, 9, 10) gelagert ist, welche Halterung ihrerseits drehbar um eine quer durch das Fahrzeug verlaufende Trägerstange (2) montiert ist und unter Normalbedingungen mittels eines abbrechbaren Verriegelungsmittels (14) fest mit der erwähnten Trägerstange (2) verriegelt ist, wobei die Lenkradwelle anfänglich einen bestimmten Winkel gegenüber einer waagrechten Ebene bildet, normalerweise nach vorne und diagonal nach unten, und die Trägerstange (2) über die Halterung in einem radialen Abstand zur Lenkradwelle (8) angeordnet ist, und eine Anschlagfläche (12) für die Knie des Fahrers in Verbindung mit dem Armaturenbrett des Fahrzeugs verschiebbar angeordnet ist, welche Anschlagfläche in einem Abstand von der Trägerstange (2) derart mit der Halterung (3, 4, 5, 6, 7, 9, 10) verbunden ist, dass die Anschlagfläche (12) bei einer Kollision von den Knien des Fahrers belastet wird, wodurch um die Trägerstange (2) ein Drehmoment auf die Halterung wirkt, das die Verriegelungswirkung des Verriegelungsmittels überwindet, und die Halterung in eine Richtung verschwenkt wird, dass die Lenkradwelle (8) im wesentlichen waagrecht und der Reif des Lenkrads im wesentlichen senkrecht vor dem Fahrer des Fahrzeugs zu stehen kommt, **dadurch gekennzeichnet, dass** auf der dem Fahrer zugewandten Anschlagfläche ein aufblasbarer Beutel in der Art eines Airbags angeordnet ist, der bei einer Kollision aufgeblasen wird und auf diese Weise die Verbindung des Fahrers mit der Anschlagfläche früher herstellt und damit die Verschiebung des Lenkrads in eine im wesentlichen senkrechte Kollisionsstellung beschleunigt.

2. Einrichtung nach Anspruch 1, **dadurch gekennzeichnet, dass** das Aufblasen des Kniebeutels durch einen standardmässigen Kollisionssensor ausgelöst wird.

## Revendications

1. Système de sécurité pour un volant dans un véhicule, permettant d'amener, pendant une collision, un volant équipé d'un coussin gonflable dans une position essentiellement verticale devant le conducteur, et comprenant un volant équipé d'un coussin gonflable avec un arbre de direction (8) relié au mécanisme de direction du véhicule et supporté de manière rotative dans un dispositif de retenue (3, 4, 5, 6, 7, 9, 10) pour la direction, lequel dispositif de retenue est monté à son tour de manière rotative autour d'une tige de support (2) qui s'étend à travers le véhicule et qui est verrouillée en conditions normales dans une position fixe par rapport à la tige de support susmentionnée (2) par un moyen de verrouillage (14) pourvu d'un moyen de rupture, l'arbre de direction formant un certain angle initial par rapport à un plan horizontal, normalement vers l'avant et diagonalement vers le bas, la tige de support (2) étant agencée dans le dispositif de retenue à une distance radiale de l'arbre de direction (8), et une surface d'impact (12) destinée aux genoux du conducteur étant agencée de manière déplaçable en association avec le tableau de bord du véhicule, laquelle surface d'impact est reliée au dispositif de retenue (3, 4, 5, 6, 7, 9, 10) à une distance de la tige de support (2), de sorte que pendant une collision, la surface d'impact (12) est sous l'impact des genoux du conducteur et applique au dispositif de retenue un couple autour de la tige de support (2) qui surmonte l'effet de verrouillage des moyens de verrouillage en basculant le dispositif de retenue dans une direction telle que l'arbre de direction (8) est amené dans une position essentiellement horizontale et le volant est amené dans une position essentiellement verticale devant le conducteur du véhicule, **caractérisé en ce que** sur la surface d'impact en regard du conducteur est agencé un sac gonflable du même type qu'un coussin gonflable, qui est destiné à être gonflé pendant une collision et ainsi à faire en sorte que le contact du conducteur contre la surface d'impact intervienne plus tôt, pour accélérer le déplacement du volant dans une position de collision essentiellement verticale.

2. Système selon la revendication 1, **caractérisé en ce que** le gonflage du coussin à genoux est déclenché par un capteur de collision de type standard.
